# EUROPEAN PATENT APPLICATION

(11) **EP 4 571 416 A1**
(43) Date of publication of application: **18.06.2025**
(21) Application number: 23852660.2
(22) Date of filing: 13.03.2023
(51) Int. Cl.: G03B 21/60, H04R 7/04

(54) **SOUND SCREEN FOR PROJECTOR**

(30) Priority: 08.08.2022 KR 20220098517
(71) Applicant: Bloomsbury Lab. Co., Ltd., Seoul 06163 (KR)
(72) Inventor: KIM, Yo Sup, Seongnam-si Gyeonggi-do 13565 (KR); KO, Jung Bong, Seoul 07344 (KR); SONG, Kwang Hyun, Incheon 21348 (KR)
(74) Representative: Jung, Minkyu
(86) International application number: PCT/KR2023/003361
(87) International publication number: WO 2024/034762

(57) **Abstract**

The present invention relates to a sound screen for a projector, comprising: a screen plate modified to increase a surface roughness of a front side; a back plate formed on a rear side of the screen plate; and an excitation device formed on the rear side of the back plate to vibrate the back plate.

## Description

### [Technical Field]

The present invention relates to a sound screen for a projector, and more specifically, to a sound screen for a projector in which a projector screen functions as speakers, particularly, a center speaker, a front speaker, and the like, in a multichannel sound system to achieve an improved sound effect.

In particular, the present invention relates to a sound screen for a projector in which surface roughness of the screen is increased to achieve wide viewing angle and high brightness characteristics and to which a sound absorption structure and the like are applied to reduce a ringing phenomenon such as vibrations or resonance in an enclosure due to vibrations of the screen to minimize image vibrations due to extreme vibrations of the screen, a sound interference phenomenon, and the like to significantly improve image and sound quality.

### [Background Art]

In general, in the case of large-scale theaters, a large screen is provided in front, and a large number of audience members watch a video projected onto the screen in seats radially arranged around the screen, and a directional speaker is disposed behind the screen and outputs center sound. In this case, the center sound refers to sound output from the front center centered on the audience and is mixed with front sound output from a front side, rear sound output from a rear side, and the like to generate multichannel sound signals.

Since the center sound output by such a directional speaker is output from behind the screen toward the screen, a phenomenon in which a portion of the sound is reflected by the screen or the screen rings occurs, and thus the sound effect is degraded.

As a method of solving such a problem, a portion of the screen where the directional speaker is located is cut (perforated) to smoothly transmit the sound output by the speaker to the front of the screen, but in this case, image loss may occur where the screen is cut.

In addition, since the sound passing through the corresponding cut portion and transmitted to the front is directed in a certain direction, the corresponding sound sounds relatively quiet compared to the other sounds (front sound and rear sound) to the audience members located outside an angle of propagation of the sound, degrading the overall sound balance. In severe cases, there may be blind spots where the center sound is not heard at all.

Meanwhile, recently, the demand for qualitative improvement in individual leisure time has been increasing, and people who are interested in video media such as movies install home theaters to achieve the effect of watching movies at home.

Such a home theater mainly uses a projector to project a video, and a projector screen used in this case reflects or projects the video emitted by the projector to allow a viewer (user) located in front of the projector screen to see the video.

Meanwhile, in the case of a home theater, a center speaker which outputs center sound among multichannel sound signals is mainly disposed under the projector screen, and since the height of the center speaker is different from that of a front speaker or rear speaker, the sound effect may be degraded.

In particular, since a home theater is installed in a specific room in a general home, there are space constraints which make it difficult to arrange the center speaker behind the projector screen, and even when the center speaker is disposed behind the projector screen, there is a disadvantage of having the same problems that occur in theaters as described above.

In addition, depending on the situation, there may be cases in which the center speaker itself cannot be used.

### [Disclosure]

### [Technical Problem]

To solve the above-described problems, the present invention is directed to providing a sound screen for a projector in which a projector screen functions as speakers, particularly, a center speaker, a front speaker, and the like, in a multichannel sound system to achieve an improved sound effect.

Accordingly, the present invention is directed to providing a sound screen for a projector which allows the sound output from the screen to spread radially toward the front (for example, 180° forward based on the screen), and thus provides improved sound with the same quality to viewers regardless of locations of the viewers by allowing the viewers (audience) radially arranged around the screen to hear the sound with the same sound pressure.

In addition, the present invention is directed to providing a sound screen for a projector in which surface roughness of the screen is increased to achieve wide viewing angle and high brightness characteristics and to which a sound absorption structure and the like are applied to reduce a ringing phenomenon such as vibrations or resonance in an enclosure due to vibrations of the screen to minimize image vibrations due to extreme vibrations of the screen, a sound interference phenomenon, and the like to significantly improve image and sound quality.

### [Technical Solution]

To achieve the above objectives, a sound screen for a projector according to the present invention includes a screen plate including a base layer which is hard and formed of a synthetic resin material and a reflective layer which is formed on a surface of the base layer and reflects an image incident on the surface, a back plate formed on a rear surface of the screen plate, and an excitation device which is formed on a rear surface of the back plate and vibrates the back plate.

In addition, the sound screen may further include a profile which is formed on the rear surface of the back plate, supports the back plate, and protects the excitation device and an amp which operates the excitation device on the basis of a sound signal input from the outside.

In addition, the sound signal may be composed of at least two sound channels, and in the excitation device, at least two vibrators provided to correspond to the sound channels may be disposed as a left-right symmetrical structure based on a virtual vertical center line formed in a center of the screen plate in a vertical direction.

In addition, the sound screen may further include a sound-absorbing member which is formed in at least one of an internal space defined by the profile and the rear surface of the back plate and reduces a ringing phenomenon due to vibrations of the excitation device.

In addition, the sound screen may further include a finishing panel for a sound absorption buffer which is formed on the rear surface of the back plate, additionally reduces the ringing phenomenon due to the vibrations of the excitation device, and reduces noise or vibrations generated due to friction with a wall or impact.

In addition, the reflective layer may be modified to increase surface roughness.

In addition, the reflective layer may be formed by coating one surface of the base layer with a paint including a bright material including an aluminum powder and a pearl pigment.

In addition, the reflective layer may include 4 wt% to 8 wt% of a black colorant, and the aluminum powder may be coated with carbon black.

In addition, the aluminum powder may include at least two particle groups having different sizes.

In addition, the aluminum powder may include a first particle group having a particle size of 6 µm to 10 µm and a second particle group having a particle size of 11 µm to 15 µm.

### [Advantageous Effects]

According to the above-described solution, the present invention has an advantage that a projector screen is configured to function as speakers, particularly, a center speaker, a front speaker, and the like, in a multichannel sound system to achieve an improved sound effect.

In addition, the present invention has an advantage of improving space utilizations because a separate center speaker or front speaker does not need to be provided.

In addition, the present invention has an advantage of providing improved sound with the same quality to viewers (audience members) radially arranged around a screen because the sound output by the screen spreads radially toward the front (for example, 180°forward based on the screen).

In addition, the present invention has advantages that wide viewing angle and high brightness characteristics are achieved by increasing the surface roughness of a screen using aluminum particles, and a sound absorption structure and the like are applied to reduce a ringing phenomenon such as vibrations or resonance in an enclosure due to vibrations of the screen to minimize image vibrations due to extreme vibrations of the screen, a sound interference phenomenon, and the like to significantly improve image and sound quality.

In addition, the present invention has an advantage of providing a screen optimized to a use environment by adjusting the characteristics, such as (surface) brightness, contrast ratio, color, color temperature, and interference with a natural and/or artificial light source, of the screen according to a ratio of bright materials such as aluminum and a pearl pigment, and a black coloring agent such as carbon black, and/or a degree of coating by the bright material and when the projector does not match with the screen, one can view an image optimized to a use environment by replacing the low-cost screen instead of replacing only the relatively expensive projector.

### [Description of Drawings]

FIG. 1 is an exploded perspective view illustrating a sound screen for a projector according to one embodiment of the present invention.
FIGS. 2 and 3 are views for describing components illustrated in FIG. 1 in more detail.
FIG. 4 shows configuration diagrams illustrating other embodiments of FIG. 1.
FIG. 5 is a view illustrating a method of manufacturing the screen plate according to one embodiment illustrated in FIG. 1.
FIG. 6 is a table showing a result of measuring brightness of the screen manufactured through the method of FIG. 5;
FIG. 7 is a table showing a result of measuring color and color temperature of the screen manufactured through the method of FIG. 5;
FIG. 8 is a table showing a result of measuring surface roughness of the screen manufactured through the method of FIG. 5; and
FIGS. 9 to 18 show measurement graphs for samples illustrated in FIG. 8

### [Modes of the Invention]

An example of a sound screen for a projector according to the present invention may be variously applied, and a most exemplary embodiment will be described below with reference to the accompanying drawings.

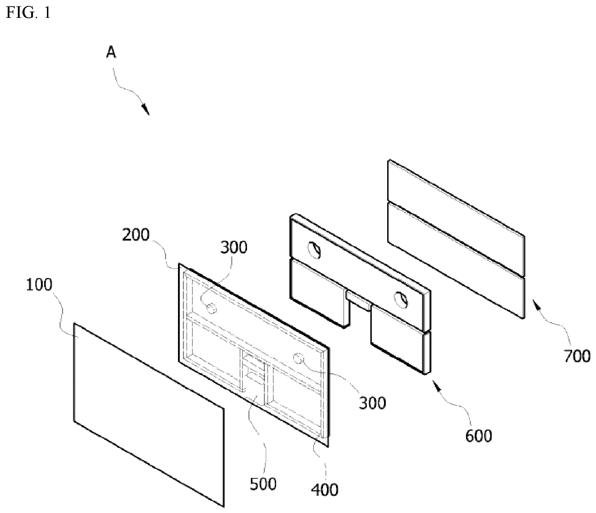

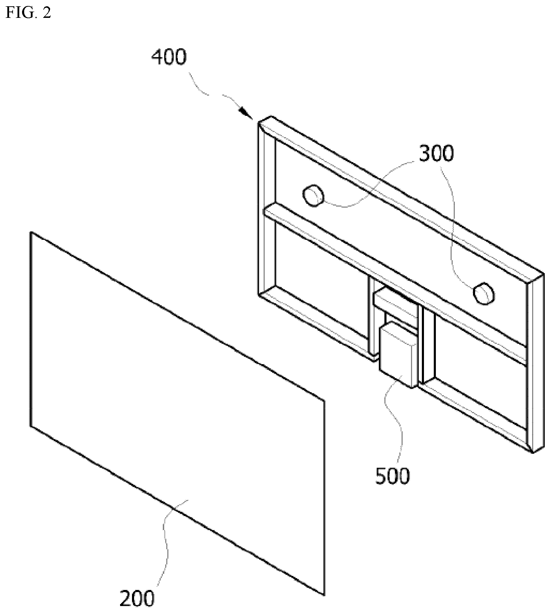

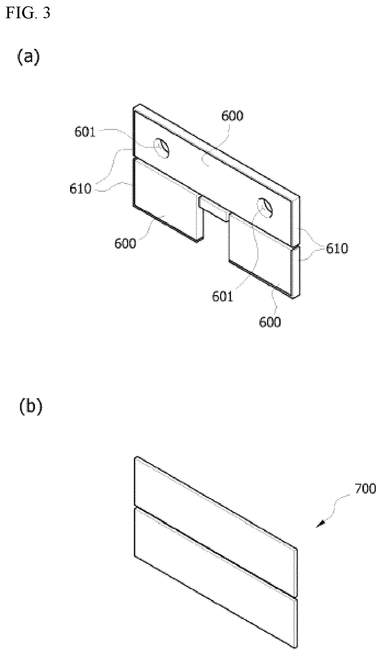

FIG. 1 is an exploded perspective view illustrating a sound screen for a projector according to one embodiment of the present invention, and FIGS. 2 and 3 are views for describing components illustrated in FIG. 1 in more detail.

Referring to FIG. 1, a sound screen A for a projector includes a screen plate 100, a back plate 200, and an excitation device 300.

The screen plate 100, onto which an image output by a projector is projected, may be formed of a polyethylene terephthalate (PET) material with superior smoothness and uniformity to achieve wide viewing angle and high brightness characteristics and formed by modifying a front surface to have increased surface roughness, which will be described below in more detail.

The screen plate 100 may be formed by being directly applied to a front surface of the back plate 200, or may be separately manufactured and attached to the front surface of the back plate 200.

The back plate 200 is formed on a rear surface of the screen plate 100 and may allow vibrations generated by the excitation device 300 to be uniformly generated throughout the entire screen plate 100.

The back plate 200 may be mainly made of a hard material, such as, a glass material, an insulating material, gypsum, or wood, as well as acrylic, polycarbonate (PC), aluminum, and the like.

The excitation device 300 may receive electrical energy to generate vibrational energy and may be formed on a rear surface of the back plate 200 to vibrate the back plate 200.

The excitation device 300 may include at least one vibrator according to its performance and a size of the screen plate 100 and the like.

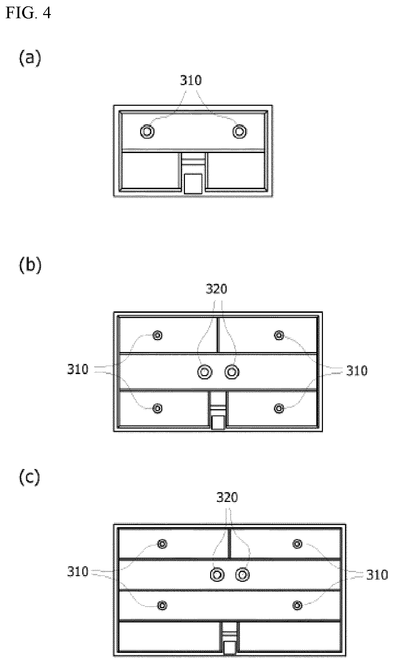

For example, the vibrator may include at least one among a 4 ohm-20 W (rated power) exciter (20 hz to 20 khz), an 8 ohm-20 W (rated power) exciter (20 hz to 20 khz, Height: 28.5±0.5 mm, Dia: 56±0.3 mm), an 8 ohm-15 W (rated power) bass shaker (20 hz to 80 hz, Height: 25 mm, Dia: 70 mm) and may be disposed as a left-right symmetrical structure as illustrated in FIG. 4.

In addition, the sound screen A for a projector may further include a profile 400 and an amp 500.

The profile 400 may be provided on the rear surface of the back plate 200 to support the back plate 200 and protect the excitation device 300.

The amp 500 may operate the excitation device 300 on the basis of a sound signal input from an external sound apparatus (not shown), may be connected to the sound apparatus through short-range wireless communication, such as Bluetooth, or by a wired line such as an auxiliary (AUX) cable, and may also be connected to the excitation device 300 by a wire or the like.

Meanwhile, the sound signal input by the external sound apparatus may include at least two sound channels and may be divided into a 2.1 channel, a 5.1 channel, a 7.1 channel, or the like according to the number of channels.

Accordingly, the excitation device 300 may include at least two vibrators corresponding to the number of some (for example, center sound and front sound) of the corresponding sound channels and, as described above, disposed as a left-right symmetrical structure based on a virtual vertical center line formed in a center of the screen plate 100 in a vertical direction.

In addition, the sound screen A for a projector may further includes a sound-absorbing member 600 which fills an internal space defined by the profile 400 and reduces a ringing phenomenon due to vibrations of the excitation device 300.

The sound-absorbing member 600 may include a plurality of divided sound-absorbing members 600 depending on the shape of the profile 400, and a through hole 601 may be formed in at least one sound-absorbing member 600 at a location where the excitation device 300 is disposed.

For example, a material of the sound-absorbing member 600 may be polyester fiber, which may serve to reduce sound, noise, and the like from the rear surface of the screen plate 100 due to vibrations of the excitation device 300.

In addition, the sound screen A for a projector may further include a finishing panel 700 for a sound absorption buffer which is provided on the rear surface of the back plate 200, additionally reduces the ringing phenomenon due to the vibrations of the excitation device 300, and reduces noise or vibrations due to friction or impact generated when a sound hits an indoor wall.

The finishing panel 700 may be formed of polyester fiber material like the sound-absorbing member and have a characteristic that a sound absorption coefficient (i.e., noise reduction coefficient (NRC)) is 0.313.

The sound screen A for a projector of the present invention may be applied to not only a screen of a general projection type projector (for example, a type requiring a certain distance (2 to 3 m) from a projector to a screen) but also a screen of an ultra-short throw (UST) projector.

However, in the case of the UST type, since the surface of the screen plate 100 should be in the form of a UST type shape (for example, a triangle waveform) rather than a general projection type, the technical features of the present invention are applied to parts other than an exterior shape of the surface of the screen plate 100.

FIG. 4 shows configuration diagrams illustrating other embodiments of FIG. 1.

Referring to FIG. 4, as described above, a vibrator of an excitation device 300 may have various sizes and characteristics depending on its performance or the characteristics of the matched sound channel and may be provided as a plurality of vibrators according to a size of a screen plate 100 and the like.

In addition, the vibrators may be disposed at various locations, but as illustrated in FIG. 4, the vibrators may be disposed as a left-right symmetrical structure based on a virtual vertical center line formed in a center of the screen plate 100 in a vertical direction.

Referring to FIG. 4A, a profile 400 may be formed in a 2-stage structure, and in an excitation device 300, two vibrators may be disposed to be left-right symmetrical in an upper portion of the 2-stage structure. For example, the two upper vibrators may include general exciters 310.

Referring to FIG. 4B, a profile 400 may be formed in a 3-stage structure, and in an excitation device 300 including six vibrators, two vibrators may be disposed in each stage to be left-right symmetrical. For example, the two vibrators in a central portion may include bass shakers 320 for low sounds, and the four upper and lower vibrators may include general exciters 310.

Referring to FIG. 4C, a profile 400 may be formed in a 4-stage structure, in an excitation device 300 including six vibrators, two vibrators may be disposed in each stage of three upper stages to be left-right symmetrical. For example, two bass shakers 320 for low sounds and four general exciters 310 may be disposed in the three upper stages in the same manner as in FIG. 4B.

In addition, the excitation device 300 may be disposed in various other forms.

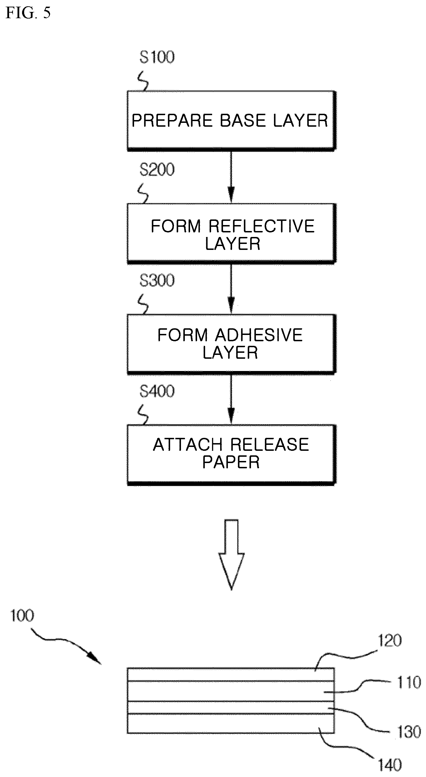

FIG. 5 is a view illustrating one embodiment of a method of manufacturing the screen plate illustrated in FIG. 1.

Referring to FIG. 5, a method of manufacturing a screen plate 100 includes operation S100 of preparing a base layer, operation S200 of forming a reflective layer, operation S300 of forming an adhesive layer, and operation S400 of attaching a release paper.

Operation S100 of preparing a base layer is a process of manufacturing a base layer 110 formed of a synthetic resin material and may mainly use PET, PC, acrylic, polyvinyl chloride (PVC), or the like.

In addition, when the screen plate 100 is manufactured using the corresponding material, a graphic film may be manufactured to have a thickness of 50 µm to 250 µm, a screen solution film may be manufactured to have a thickness of 175 µm to 250 µm, and the screen plate 100 may be manufactured and applied in various ways according to the purpose of use and needs of those skilled in the art.

Operation S200 of forming a reflective layer is a process of forming (painting, applying) a reflective layer 120 on one surface (upper surface in FIG. 5) of the base layer 110 using (spraying) a reflective paint, and the main component of the reflective paint may include bright materials including an aluminum powder and a pearl pigment. For example, the reflective layer 120 may be formed of aluminum particles, beads, a matting agent, a colorant, an oil-based PVC resin, a thinner, etc.

In addition, in operation S200 of forming a reflective layer, the corresponding paint may be applied by spraying in vertical and horizontal directions while adjusting a spray pattern and a spray amount which are set for the paint.

For example, when a material of the base layer 110 is PET, in operation S200 of forming a reflective layer, the corresponding reflective paint may be applied to a thickness of 3 µm to 5 µm.

More specifically, when the corresponding reflective paint is applied in operation S200 of forming a reflective layer, the paint may be applied once at 1.4 m/s to 1.8 m/s and once at 1.8 m/s to 2.2 m/s based on a spray amount of 70 g to 100 g per minute when a horizonal movement of 110 mm is set as one cycle speed.

In addition, the above-described reflective paint will be described below in more detail.

The reflective paint for the screen plate 100 of the present invention may include 8 wt% to 12 wt% aluminum powder in an oil-based synthetic resin, and in particular, the aluminum powder may include at least two particle groups having different sizes. In this case, the oil-based synthetic resin may include PVC.

For example, the aluminum powder may include a first particle group having a particle size of 6 µm to 10 µm and a second particle group having a particle size of 11 µm to 15 µm.

As the particle groups having two sizes are mixed, small particles may fill gaps between large particles so that the particle groups may be uniformly distributed over the entire area.

In addition, the reflective paint for the screen plate 100 may further include 1 wt% to 4 wt% matting agent having a particle size of 3 µm to 5 µm.

In addition, the reflective paint for the screen plate 100 may further include 1 wt% to 4 wt% beads made of a synthetic resin material.

In this case, the beads are intended to strengthen surface scratches (increase surface roughness) of the reflective layer to diffuse light, and as described above, even without forming a separate diffusion layer, the beads allow the reflective layer to also serve as a diffusion layer, and thus the entire process is reduced to improve productivity. In this case, the beads may be made of polypropylene.

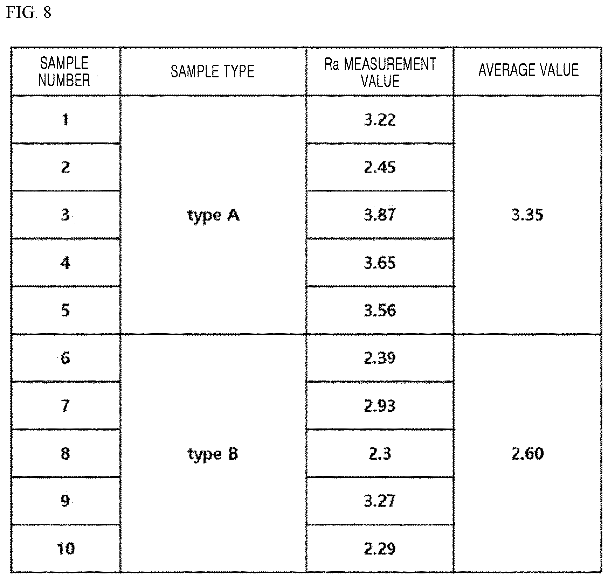

In the present invention, the surface roughness of the reflective layer due to the beads may have an arithmetical mean deviation of the profile (Ra) value of 2 µm to 4 µm as shown in FIG. 8.

In addition, the reflective paint for the screen plate 100 may further include 2 wt% to 8 wt% colorant and 20 wt% to 30 wt% thinner.

Accordingly, the oil-based synthetic resin may be mixed at 42 wt% to 68 wt% based on the total weight of the reflective paint.

When the reflective layer 120 is formed on one surface of the base layer 110 through the above-described process, an adhesive layer 130 may be laminated on the other surface of the base layer 110 (S300), a release paper 140 is laminated (attached) on the adhesive layer 130 (S400), and thus a projector screen with an improved viewing angle and improved brightness may be manufactured according to the present invention.

Looking at the screen plate 100 manufactured as described above in more detail, as shown in FIG. 5, the base layer 110 formed of a synthetic resin material and the reflective layer 120 formed by spraying a paint including an aluminum powder on one surface (an upper surface in FIG. 5) of the base layer 110 and modified to increase the surface roughness may be formed.

In this case, when the surface brightness of the screen plate 100 needs to be further improved, the reflective layer 120 may include 2 wt% to 4 wt% black colorant.

In other words, in operation S200 of forming a reflective layer in the above-described method of manufacturing the screen plate 100, the reflective paint for the screen plate 100 may be made by including 2 wt% to 4 wt% black colorant.

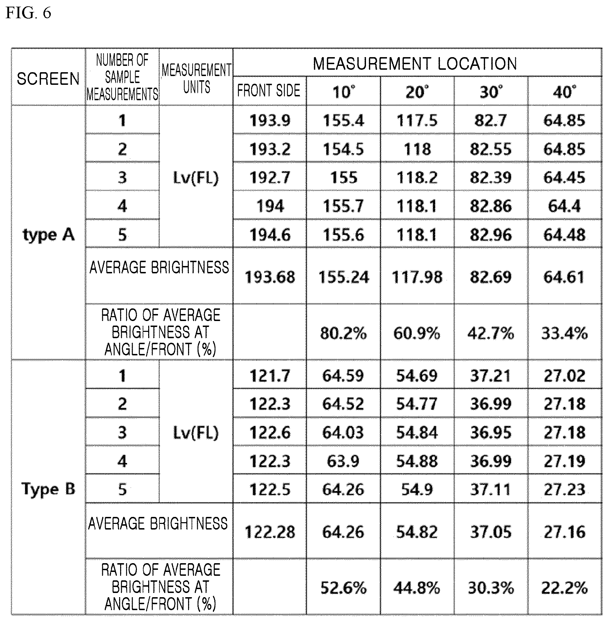

As a result of measuring the brightness of the reflective layer 120 of the screen plate 100 (type A) with relatively improved surface brightness as described above in a dark room using a "Konica Minolta CS-150" color luminance meter, as shown in FIG. 6, the brightness was 190 Lv to 200 Lv at a front viewing angle, 150 Lv to 160 Lv at a viewing angle of 10° relative to the front, 110 Lv to 120 Lv at a viewing angle of 20° relative to the front, 78 Lv to 88 Lv at a viewing angle of 30° relative to the front, and 60 Lv to 70 Lv at a viewing angle of 40° relative to the front. In this case, a distance between a projector and a sample was 1900 mm, and a distance and a height between the meter and the sample was 2460 mm and 1335 mm, respectively.

In the case of a general screen having similar characteristics, the brightness is measured to be 192.58 Lv at the front viewing angle, 115.66 Lv at the viewing angle of 10° based on the front, 84.12 Lv at the viewing angle of 20° relative to the front, 52.48 Lv at the viewing angle of 30° relative to the front, and 36.56 Lv at the viewing angle of 40° relative to the front.

When the screen plate 100 (type A) of the present invention is compared with the general screen, it can be seen that the screen plate 100 (type A) has a similar brightness characteristic at the front viewing angle, but brightness characteristics are significantly improved as one moves to the side.

When a contrast ratio of the screen plate 100 needs to be further improved, the reflective layer 120 may include 4 wt% to 8 wt% black colorant, and the aluminum powder may be coated with carbon black.

**In** other words, in operation S200 of forming a reflective layer in the method of manufacturing the screen plate 100, the aluminum powder may be coated with carbon black, and 4 wt% to 8 wt% black colorant may be included to make the reflective paint for the screen plate 100.

As a result of measuring the brightness of the reflective layer 120 of the screen plate 100 (type B) with a relatively further improved contrast ratio as described above was measured in a dark room using a "Konica Minolta CS-150" color luminance meter, as shown in FIG. 6, the brightness was 120 Lv to 125 Lv at the front viewing angle, 60 Lv to 65 Lv at the viewing angle of 10° relative to the front, 50 Lv to 55 Lv at the viewing angle of 20° relative to the front, 35 Lv to 40 Lv at the viewing angle of 30° relative to the front, and 25 Lv to 39 Lv at the viewing angle of 40° relative to the front.

In the case of the general screen having similar characteristics, the brightness is measured to be 58.33 Lv at the front viewing angle, 48.04 Lv at the viewing angle of 10° relative to the front, 39.94 Lv at the viewing angle of 20° relative to the front, 27.38 Lv at the viewing angle of 30° relative to the front, and 23.91 Lv at the viewing angle of 40° relative to the front.

When the screen plate 100 (type B) of the present invention is compared with the general screen, it can be seen that the screen plate 100 (type B) has significantly improved brightness characteristics at all viewing angles.

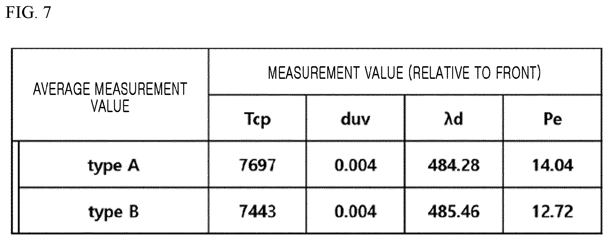

In addition, the color and color temperature of each screen are shown in FIG. 7, and in FIG. 7, Tcp denotes a correlated color temperature, duv denotes delta ultraviolet (UV, color difference from black body locus), Pe denotes an excitation purity, and λd denotes a dominant wavelength.

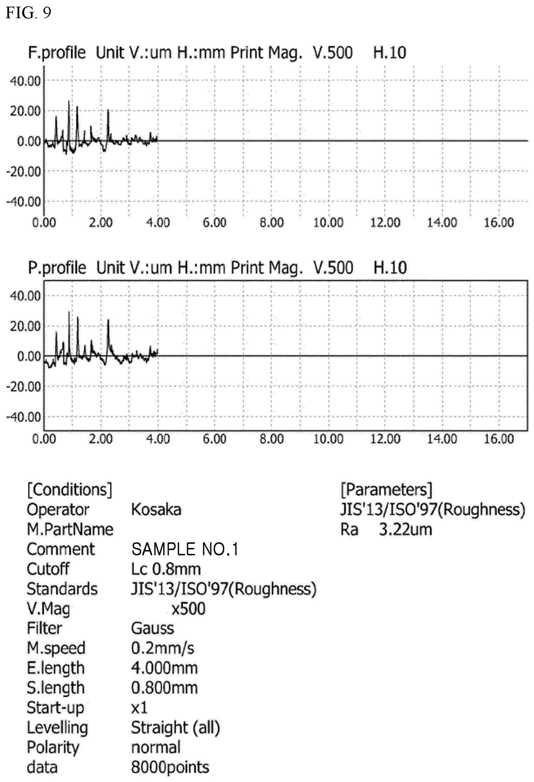

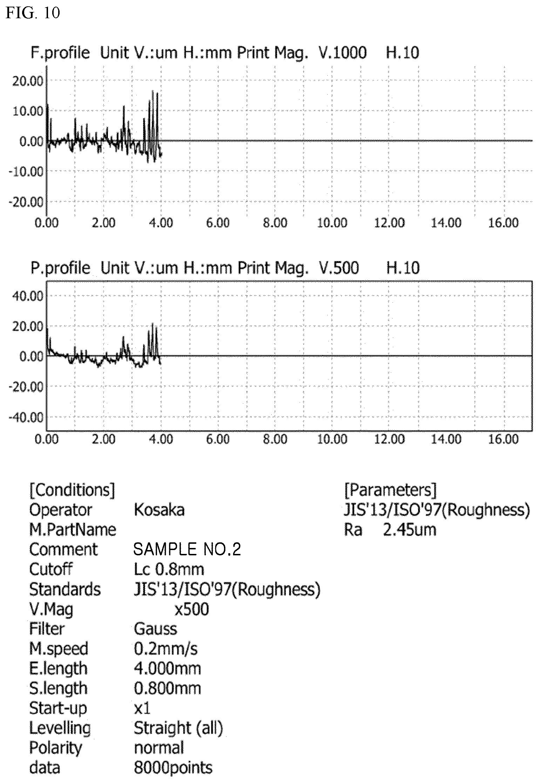

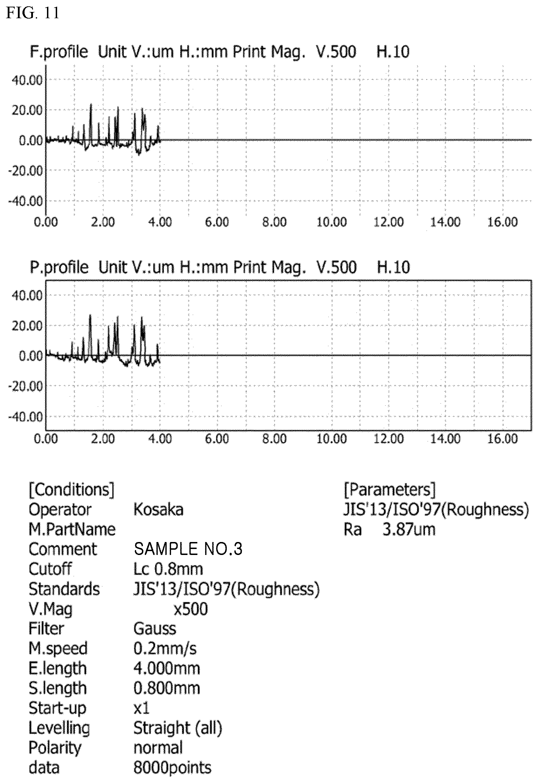

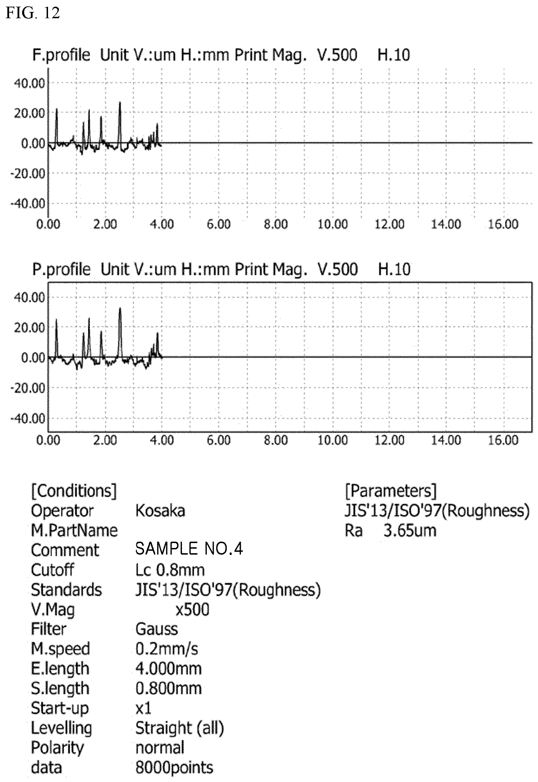

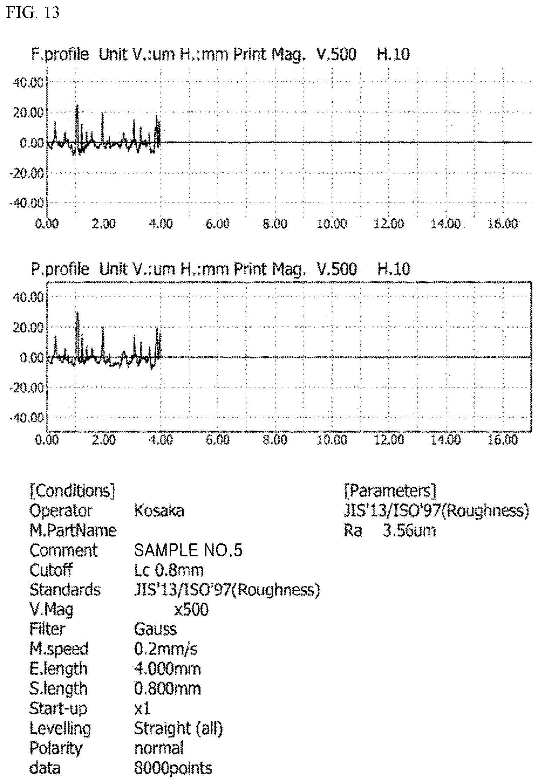

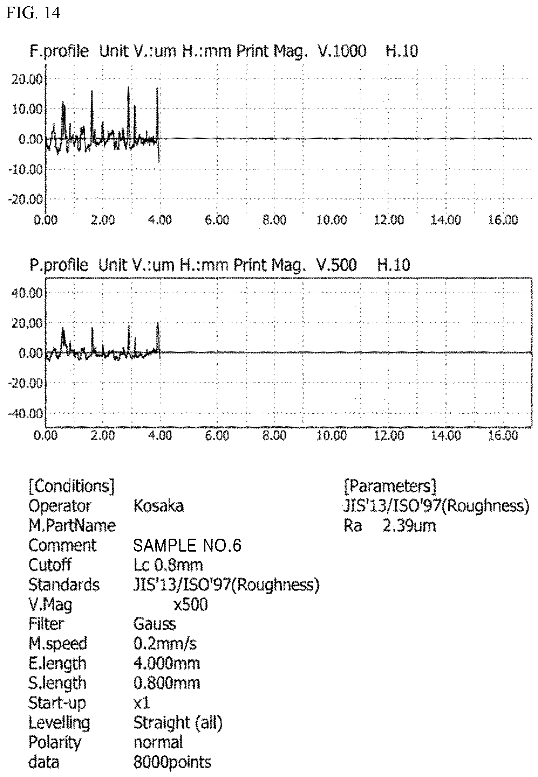

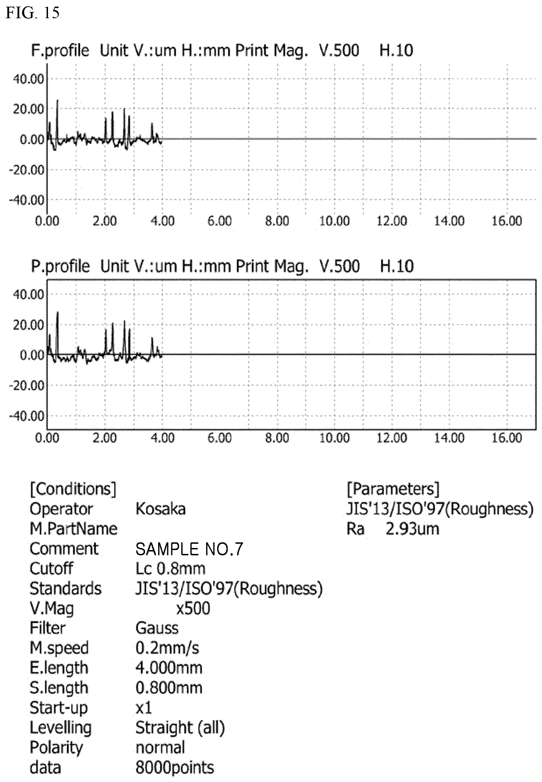

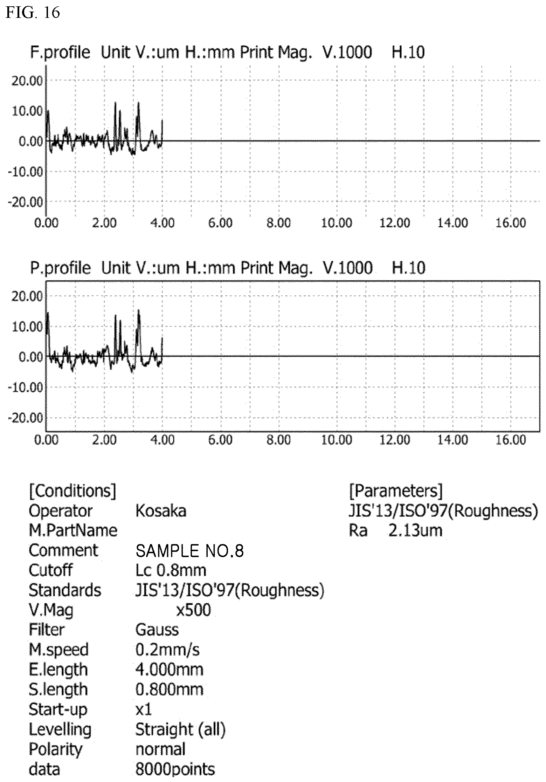

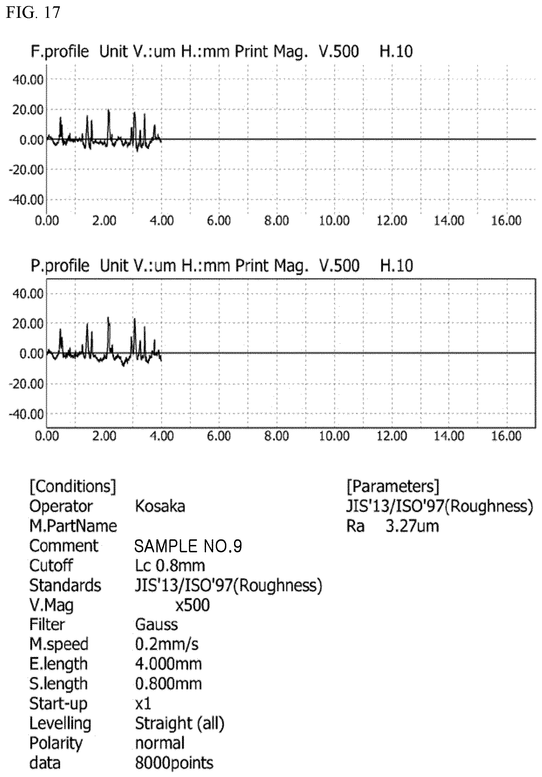

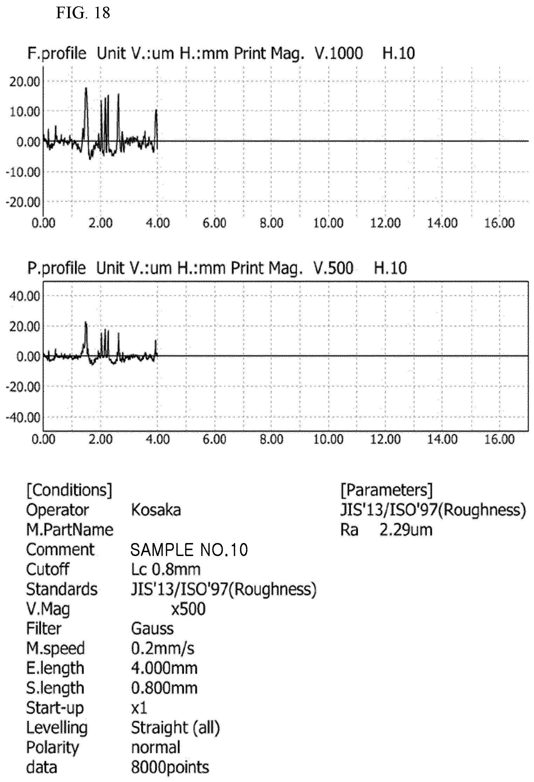

In addition, the surface roughness of each screen plate 100 is shown in FIG. 8, and a measurement graph for each sample is shown in FIGS. 9 to 18. In this case, the surface roughness of each sample was measured using "SE 3500" (contact type measurement apparatus).

The surface roughness may have an arithmetical mean deviation of the profile (Ra) value of 2 µm to 4 µm as described with reference to FIG. 8.

On the other hand, in the case of the general screen, an average value of the surface roughness is 0.93 µm, and compared to this, it can be seen that the surface roughness of the screen plate 100 of the present invention is high, and thus it can be seen that light can be more actively diffused in the reflective layer 120 of the screen plate 100 of the present invention and brightness is also increased.

As a result, it can be seen that the present invention has the surface roughness characteristics shown in FIG. 8, the brightness characteristic for each viewing angle shown in FIG. 6, and color and color temperature characteristics shown in FIG. 7 when the reflective layer 120 is formed according to the above-described mixing ratio of the paint and the like.

The brightness, color, and color temperature characteristics for each viewing angle may be optimal conditions for achieving wide viewing angle and high brightness characteristics which are objectives of the present invention.

In addition, in the present invention, the screen plate 100 may be formed on the front of the back plate 200 by forming the base layer 110 on the front of the back plate 200 and the reflective layer 120 on one surface of the base layer 110.

In addition, in the present invention, after the screen plate 100 formed of the reflective layer 120, the base layer 110, the adhesive layer 130, and the release paper 140 is manufactured, the release paper 140 may be removed, and the screen plate 100 may be attached to the front of the back plate 200.

The sound screen for a projector according to the present invention has been described above. It will be understood that by those skilled in the art that the technical configuration of the present invention may be implemented in other specific forms without changing the technical scope or essential features of the present invention.

Therefore, the above-described embodiments should be understood as illustrative in all aspects and not restrictive.

**[Reference Numerals]**

| | | | |
|---|---|---|---|
| A: | SOUND SCREEN FOR PROJECTOR | | |
| 100: | SCREEN PLATE | | |
| 110: | BASE LAYER | 120: | REFLECTIVE LAYER |
| 130: | ADHESIVE LAYER | 140: | RELEASE PAPER |
| 200: | BACK PLATE | | |
| 300: | EXCITATION DEVICE | | |
| 400: | PROFILE | | |
| 500: | AMP | | |
| 600: | SOUND-ABSORBING MEMBER | 601: | THROUGH HOLE |
| 610: | EVA FOAM | | |
| 700: | FINISHING PANEL | | |

### [Industrial Applicability]

The present invention can be applied to the field of projector screens, particularly, the field of screens having a speaker function and the field of screens for front projection, the field of screens with wide viewing angle and high brightness characteristics, the field of paints used for manufacturing the corresponding screens, the field of methods of applying the corresponding paints, and similar or related fields, thereby improving the reliability and competitiveness of products in the corresponding fields.

## Claims

1. A sound screen for a projector, comprising:
a screen plate including a base layer which is hard and formed of a synthetic resin material and a reflective layer which is formed on a surface of the base layer and reflects an image incident on the surface;
a back plate formed on a rear surface of the screen plate; and
an excitation device which is formed on a rear surface of the back plate and vibrates the back plate.

2. The sound screen of claim 1, further comprising:
a profile which is formed on the rear surface of the back plate, supports the back plate, and protects the excitation device; and
an amp which operates the excitation device on the basis of a sound signal input from an outside.

3. The sound screen of claim 2, wherein:
the sound signal includes at least two sound channels; and
in the excitation device, at least two vibrators provided to correspond to the sound channels are disposed as a left-right symmetrical structure based on a virtual vertical center line formed in a center of the screen plate in a vertical direction.

4. The sound screen of claim 2, further comprising a sound-absorbing member which is formed in at least one of an internal space defined by the profile and the rear surface of the back plate and reduces a ringing phenomenon due to vibrations of the excitation device.

5. The sound screen of claim 4, further comprising a finishing panel for a sound absorption buffer which is formed on the rear surface of the back plate, additionally reduces the ringing phenomenon due to the vibrations of the excitation device, and reduces noise or vibrations generated due to friction with a wall or impact.

6. The sound screen of claim 1, wherein the reflective layer is modified to increase surface roughness.

7. The sound screen of claim 6, wherein the reflective layer is formed by coating one surface of the base layer with a paint including a bright material including an aluminum powder and a pearl pigment.

8. The sound screen of claim 7, wherein:
the reflective layer includes 4 wt% to 8 wt% black colorant; and
the aluminum powder is coated with carbon black.

9. The sound screen of claim 7, wherein the aluminum powder includes at least two particle groups having different sizes.

10. The sound screen of claim 9, wherein the aluminum powder includes:
a first particle group having a particle size of 6 µm to 10 µm; and
a second particle group having a particle size of 11 µm to 15 µm.
